# EUROPÄISCHE PATENTSCHRIFT

(11) **EP 0 916 889 B1**
(45) Veröffentlichungstag und Bekanntmachung des Hinweises auf die Patenterteilung: **31.07.2002**
(21) Anmeldenummer: 98120748.3
(22) Anmeldetag: 02.11.1998
(51) Int. Cl.: F16L 55/162, B21D 39/20, G21C 17/108, G21C 17/10, F16L 13/14

(54) **Verfahren zum Stabilisieren eines Rohres und stabilisiertes Rohr**
Method for reinforcing a pipe and a reinforced pipe
Méthode de renforcement d'un tuyau et un tuyau renforcé

(30) Priorität: 14.11.1997 DE 19750562
(43) Veröffentlichungstag der Anmeldung: 19.05.1999
(73) Patentinhaber: Framatome ANP GmbH, 91050 Erlangen (DE)
(72) Erfinder: Lelickens, Hartmut, Dipl.-Ing., 91369 Wiesenthau (DE); Meier-Hynek, Konrad, 91074 Herzogenaurach (DE); Leibold, Friedrich, Dipl.-Ing., 91230 Happurg (DE)
(74) Vertreter: Tergau & Pohl Patentanwälte

(56) Entgegenhaltungen:
- US-A- 3 678 560
- US-A- 3 785 193
- US-A- 5 667 252

## Beschreibung

Die Erfindung betrifft ein Verfahren zum Stabilisieren eines Gehäuserohres für Meßgeräte in einem Kernreaktor, das aus einem ersten und einem zweiten Teil besteht, die mit einer Fügeverbindung aneinandergefügt sind.

Die Erfindung betrifft auch ein Gehäuserohr für Meßgeräte in einem Kernreaktor, das aus einem ersten und einem zweiten Teil besteht, die mit einer Fügeverbindung aneinandergefügt sind.

Ein solches Gehäuserohr für Meßgeräte wird häufig mit Kernflußmeßgehäuserohr bezeichnet. Es erstreckt sich durch einen Reaktordruckbehälter von oben nach unten und enthält beispielsweise Meßgeräte zum Bestimmen des Neutronenflusses. Damit solche Gehäuserohre leicht in den Reaktordruckbehälter eingebaut werden können, bestehen sie aus einem ersten Teil (Oberteil) und einem zweiten Teil (Unterteil), die aus entgegengesetzten Richtungen von oben und unten in den Reaktordruckbehälter eingeführt werden. Eines dieser beiden Teile weist einen Sitz für das andere Teil auf, so daß die beiden Teile im Reaktordruckbehälter zusammengefügt werden können. Die dadurch gebildete Verbindung wird Fügeverbindung genannt.

Im Bereich der Fügeverbindung können die beiden Rohrteile in radialer Richtung zueinander versetzt angeordnet sein. Das kann darauf zurückzuführen sein, daß der Sitz am einen Rohrteil nicht exakt auf das andere Rohrteil abgestimmt ist. Die Folge davon können radiale Bewegungen der Rohrteile gegeneinander sein, die zu Folgeschäden am Rohr führen könnten. Darüber hinaus könnte bei einem relativ großen Spiel des einen Rohrteiles in dem Sitz am anderen Rohrteil im Bereich der Fügeverbindung eine Öffnung entstehen, durch die von außen ein Medium in das Rohr hineingelangen könnte. Bei einem Kernflußmeßgehäuserohr könnte Reaktorwasser eindringen. Infolge dessen könnte die dadurch erzeugte Strömung im Inneren des Rohres die dort vorhandenen Meßgeräte beschädigen.

Aus der GB 2 094 435 A ist ein Verfahren zum Reparieren von Dampferzeugerrohren bekannt, bei dem eine defekte Schweißverbindung mit einem Innenrohr (Sleeverohr) überdeckt wird. Es handelt sich dabei nicht um eine Fügeverbindung. Außerdem wird die Verbindung nicht stabilisiert. Das Sleeverohr dient beim Bekannten nur dazu, in einem Reparaturverfahren undichte Stellen zu überdecken und damit abzudichten.

Aus der US-A-3678560 ist ein Verfahren zum Stabilisieren eines Rohres beim Abdichten einer Gasleitung bekannt, bei dem ein Innenrohr eingeschoben und anschließend derart aufgeweitet wird, daß es an den Innenwänden der Rohrteile anliegt. Dieses Konzept ist jedoch nicht für den Einsatz in einer kerntechnischen Anlage vorgesehen und dementsprechend auch nicht auf die dortigen speziellen Erfordernisse ausgerichtet.

Der Erfindung lag die Aufgabe zugrunde, für ein zweiteiliges Gehäuserohr, das in einem Kernreaktor zur Aufnahme von Meßgeräten dient, ein Verfahren zum Stabilisieren des Gehäuserohres und ein stabilisiertes Gehäuserohr anzugeben, bei dem es nicht zu radialen Relativbewegungen der Rohrteile zueinander kommen kann, so daß weder Folgeschäden durch Aneinanderschlagen der Rohrteile entstehen können, noch ein Medium von außen an der Fügeverbindung der Rohrteile in das Gehäuserohr hineingelangen kann.

Die Aufgabe, ein geeignetes Verfahren anzugeben, wird gemäß der Erfindung dadurch gelöst, daß in das Gehäuserohr die Fügeverbindung überdeckend ein Innenrohr (Sleeverohr) eingesetzt und aufgeweitet wird, bis es an den Innenwänden der Teile des Gehäuserohres anliegt, wobei das Innenrohr am ersten Teil des Gehäuserohres angepreßt wird, so daß eine feste mechanische Verbindung entsteht, während es am zweiten Teil des Gehäuserohres nur angedrückt wird, so daß ein Schiebesitz gebildet ist.

Damit wird der Vorteil erzielt, daß selbst dann, wenn ein Spiel zwischen den beiden Rohrteilen vorhanden war, diese sich dann nicht mehr in radialer Richtung gegeneinander bewegen können. Es kann folglich nicht mehr zu Folgeschäden am Gehäuserohr durch ein Aneinanderschlagen der Rohrteile kommen. Durch das Innenrohr werden auch mögliche, wenn auch sehr kleine Öffnungen im Gehäuserohr im Bereich der Fügeverbindung überdeckt, so daß kein Medium von außen in die Rohrleitung eindringen kann. Es wird der besondere Vorteil erzielt, daß die im Gehäuserohr (z.B. ein Kernflußmeßgehäuserohr) angeordneten Meßgeräte nicht durch eine von außen eindringende Kühlwasserströmung beschädigt werden können.

Gerade durch den Schiebesitz liegt das Innenrohr zwar dicht an der Innenoberfläche, des Gehäuserohres an, es ist aber trotzdem eine Relativbewegung des Innenrohres und des zweiten Teiles des Gehäuserohres zueinander in axialer Richtung möglich. Damit wird der Vorteil erzielt, daß vorhandene axiale Bewegungen der beiden Rohrteile zueinander das Innenrohr nicht beschädigen können.

Bei einem Gehäuserohr (z.B. Kernflußmeßgehäuserohr) können die axialen Relativbewegungen der Rohrteile zueinander auf unterschiedliche Wärmedehnungen des Rekatordruckbehälters und/oder der Kerneinbauten zurückzuführen sein. Wenn das Innenrohr am ersten, oberen Teil des Gehäuserohres fest angepreßt ist und mit dem zweiten, unteren Teil des Rohres einen Schiebesitz bildet, können diese Bewegungen der Rohrteile das Innenrohr nicht beschädigen, so daß radiale Bewegungen der Rohrteile zueinander und ein Eindringen von Kühlwasser in das Rohr weiterhin vermieden werden.

Das Innenrohr kann beispielsweise hydraulisch und/oder mechanisch aufgeweitet werden. Dadurch paßt es sich gut an die Innenoberfläche des Gehäuserohres an.

Beispielsweise wird das Innenrohr vor dem Einsetzen in das Rohr im für den Schiebesitz bestimmten Bereich beschichtet oder einer anderen Oberflächenbehandlung unterworfen. Damit erzielt man gute Gleiteigenschaften und folglich einen zuverlässigen Schiebesitz.

Es kann z.B. eine Schicht aus Chromkarbid, Titannitrit oder Nickel aufgebracht werden. Geeignete andere Oberflächenbehandlungen sind z.B. Hartverchromen, Glasperlenstrahlen oder ein Kaltverfestigen der Oberfläche, z.B. durch Rollieren.

Die Wandstärke des Innenrohres beträgt beispielsweise zwischen 2mm und 3mm. Sie kann beispielsweise 2,6mm betragen. Eine solche Wandstärke reicht aus, um radiale Bewegungen und das Eindringen von Medium zu verhindern und läßt ausreichend Platz im Rohr frei, z.B. für Meßgeräte.

Die Aufgabe, ein geeignetes Gehäuserohr anzugeben, wird nach der Erfindung dadurch gelöst, daß zur Stabilisierung die Fügeverbindung überdeckend ein Innenrohr (Sleeverohr) an den Innenwänden der Teile des Rohres anliegt, wobei das Innenrohr mit dem ersten Teil des Gehäuserohres fest verbunden ist und am zweiten Teil des Gehäuserohres einen Schiebesitz bildend anliegt.

Ein solches Gehäuserohr ist vorteilhafterweise so stabil, daß es nicht zu radialen Bewegungen der Rohrteile relativ zueinander kommen kann, was zu Beschädigungen führen könnte. Darüber hinaus kann kein Medium von außen im Bereich der Fügeverbindung in das Gehäuserohr eindringen.

Durch den Schiebesitz wird der Vorteil erzielt, daß sich die beiden Rohrteile in axialer Richtung zueinander bewegen können, ohne daß das Innenrohr beschädigt wird. Selbst dann, wenn.eine axiale Bewegung eines

Rohrteiles relativ zum anderen erfolgt, wird eine radiale Bewegung der Rohrteile zueinander durch das Innenrohr verhindert, so daß es nicht zu Beschädigungen, die auf ein Aneinanderschlagen der Rohrteile zurückzuführen wären, kommen kann. Darüber hinaus ist das Gehäuserohr im Bereich der Fügeverbindung stets durch das Innenrohr abgedichtet.

Das Innenrohr ist beispielsweise im Bereich des Schiebesitzes beschichtet oder oberflächenbehandelt, wodurch es auf der Innenoberfläche des Rohrteiles gut gleiten kann.

Die Wandstärke des Innenrohres liegt beispielsweise zwischen 2mm und 3mm und beträgt z.B. 2,6mm. Ein solches Innenrohr verhindert radiale Bewegungen der Rohrteile zueinander im Bereich der Fügeverbindung und dichtet die Rohrteile dort ab, ohne daß im Gehäuserohr für Meßgeräte deutlich weniger Raum als sonst zur Verfügung stünde.

Mit dem Verfahren und mit dem Gehäuserohr nach der Erfindung wird insbesondere der Vorteil erzielt, daß es an einer Fügeverbindung von zwei Rohrteilen, die beispielsweise an einem Kernflußmeßgehäuserohr vorhanden ist, weder zu Beschädigungen durch radiale Schwingungen oder Bewegungen eines oder beider Rohrteile noch zu Öffnungen, durch die hindurch Strömungen eines Mediums im Inneren des Gehäuserohres ausgelöst werden, kommen kann.

Im übrigen werden durch das Innenrohr auch andere mögliche schadhafte Stellen, z.B. Risse, im Rohr überdeckt und abgedichtet.

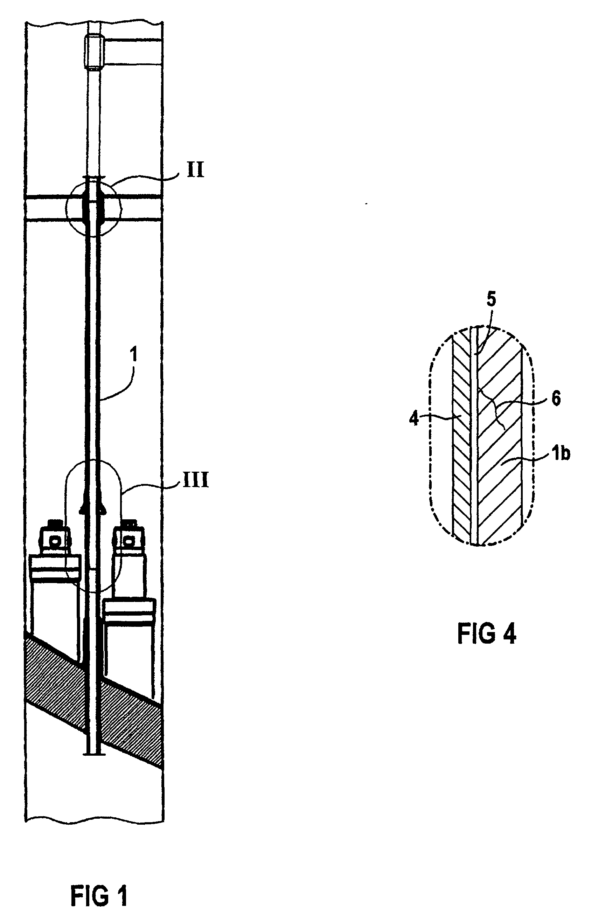

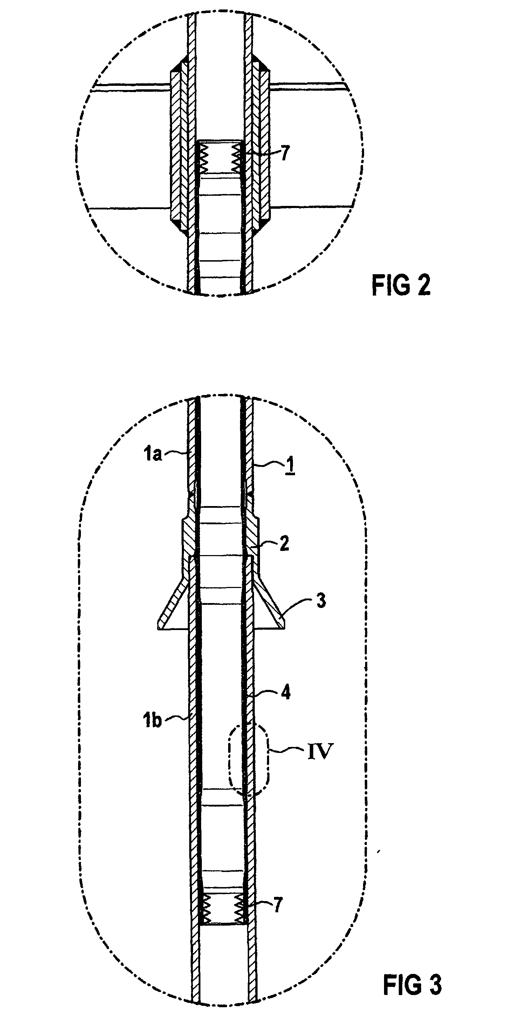

Das Verfahren und das Gehäuserohr nach der Erfindung werden anhand der Zeichnung näher erläutert:

Die Zeichnung zeigt ein Kernflußmeßgehäuserohr, das durch ein Innenrohr (Sleeverohr) stabilisiert ist.

Das Kernflußmeßgehäuserohr 1 besteht aus einem ersten, oberen Teil 1a und einem zweiten, unteren Teil 1b. Der obere Teil 1a weist einen Sitz 2 auf, an dem der untere Teil 1b mit einer Stirnfläche anliegt. Dadurch ist eine Fügeverbindung gegeben. Zum besseren Aneinanderfügen der beiden Teile 1a und 1b weist der obere Teil 1a einen Einführungstrichter 3 auf.

Wenn die Fügeverbindung nicht sehr exakt ausgebildet ist, können sich die beiden Teile 1a und 1b relativ zueinander in radialer Richtung bewegen. Sie schlagen dann aneinander, was zu Beschädigungen führen kann. Außerdem könnte Kühlwasser, das außerhalb des unteren Teiles 1b nach oben steigt, im Bereich der Fügeverbindung durch einen möglichen Spalt zwischen dem unteren Teil 1b und dem oberen Teil 1a in das Innere des Kernflußmeßgehäuses 1 hineingelangen. Die sich dort im Inneren ausbildende Strömung könnte Schäden an Meßgeräten im Kernflußmeßgehäuserohr 1 nach sich ziehen.

Zur Stabilisierung und zur Abdichtung des Kernflußmeßgehäuserohres 1 ist in diesem ein Innenrohr 4 oder Sleeverohr angeordnet, das an den Innenwänden der beiden Teile 1a und 1b des Kernflußmeßgehäuserohres 1 anliegt. Das Innenrohr 4 verhindert radiale Bewegungen der beiden Teile 1a und 1b zueinander und dichtet das Kernflußmeßgehäuserohr 1 von innen ab.

Um mögliche axiale Bewegungen der beiden Teile 1a und 1b zueinander weiterhin zu ermöglichen, ist das Innenrohr 4 am oberen Teil 1a fest angepreßt, während es am unteren Teil 1b nur anliegt. Es bildet mit dem unteren Teil 1b folglich einen Schiebesitz. Damit der untere Teil 1b und das Innenrohr 4 in axialer Richtung gut aufeinander gleiten können, ist das Innenrohr 4 im Bereich des Schiebesitzes außen mit einer Schicht 5 überdeckt.

Die Wandstärke des Innenrohres 4 kann zwischen 2mm und 3mm, insbesondere 2,6mm, betragen.

Durch das Innenrohr 4 werden radiale Bewegungen der Teile 1a und 1b des Kernflußmeßgehäuserohres 1 verhindert, die zu Beschädigungen führen könnten. Außerdem wird verhindert, daß Kühlwasser von außen an der Fügeverbindung der beiden Teile 1a und 1b in das Kernflußmeßgehäuserohr 1 eindringt, wo die dadurch erzeugte Strömung Meßgeräte beschädigen könnte. Zusätzlich werden durch das Innenrohr 4 mögliche Risse 6 im Kernflußmeßgehäuserohr 1 überdeckt und abgedichtet.

Um einen einfachen Wiederausbau des Innenrohres 4 zu ermöglichen, kann es zumindest an einem Ende ein Innengewinde 7 aufweisen. Dort kann ein Werkzeug angreifen.

## Patentansprüche

1. Verfahren zum Stabilisieren eines Gehäuserohres für Meßgeräte in einem Kernreaktor, das aus einem ersten und einem zweiten Teil besteht, die mit einer Fügeverbindung aneinandergefügt sind,
**dadurch gekennzeichnet, daß** in das Rohr die Fügeverbindung überdeckend ein Innenrohr (4) eingesetzt und aufgeweitet wird, bis es an den Innenwänden der Teile des Rohres anliegt, wobei das Innenrohr (4) am ersten Teil des Rohres eine feste Verbindung bildend angepreßt wird und am zweiten Teil des Rohres einen Schiebesitz bildend angedrückt wird.

2. Verfahren nach Anspruch 1,
**dadurch gekennzeichnet, daß** das Innenrohr (4) hydraulisch und/oder mechanisch aufgeweitet wird.

3. Verfahren nach Anspruch 1 oder 2,
**dadurch gekennzeichnet, daß** das Innenrohr (4) vor dem Einsetzen in das Rohr im für den Schiebesitz bestimmten Bereich beschichtet oder einer anderen Oberflächenbehandlung unterworfen wird.

4. Verfahren nach einem der Ansprüche 1 bis 3,
**dadurch gekennzeichnet, daß** die Wandstärke des Innenrohres (4) zwischen 2mm und 3mm beträgt.

5. Gehäuserohr für Meßgeräte in einem Kernreaktor, das aus einem ersten und einem zweiten Teil besteht, die mit einer Fügeverbindung aneinandergefügt sind,
**dadurch gekennzeichnet, daß** zur Stabilisierung die Fügeverbindung überdeckend ein Innenrohr (4) an den Innenwänden der Teile des Rohres anliegt, wobei das Innenrohr (4) mit dem ersten Teil fest verbunden ist und am zweiten Teil einen Schiebesitz bildend anliegt.

6. Gehäuserohr nach Anspruch 5,
**dadurch gekennzeichnet, daß** das Innenrohr (4) im Bereich des Schiebesitzes beschichtet oder oberflächenbehandelt ist.

7. Gehäuserohr nach Anspruch 5 oder 6,
**dadurch gekennzeichnet, daß** die Wandstärke des Innenrohres (4) zwischen 2mm und 3mm beträgt.

## Claims

1. Method for stabilising a housing tube for measuring instruments in a nuclear reactor, which tube consists of a first and a second part which are joined together by a joint,
**characterised in that** an inner tube (4) is inserted in the tube so as to cover the joint and is widened until it lies against the inner walls of the tube parts, wherein the inner tube (4) is pressed against the first part of the tube so as to form a firm connection and against the second part of the tube so as to form a sliding fit.

2. Method according to Claim 1,
**characterised in that** the inner tube (4) is widened hydraulically and/or mechanically.

3. Method according to Claim 1 or 2,
**characterised in that** the inner tube (4) is coated or subjected to a different surface treatment in the region intended for the sliding fit before being inserted in the tube.

4. Method according to any one of Claims 1 to 3,
**characterised in that** the wall thickness of the inner tube (4) is between 2mm and 3mm.

5. Housing tube for measuring instruments in a nuclear reactor, which tube consists of a first and a second part which are joined together by a joint,
**characterised in that**, for stabilising purposes, an inner tube (4) lies against the inner walls of the tube parts so as cover the joint, wherein the inner tube (4) is firmly connected to the first part and lies against the second part so as to form a sliding fit.

6. Housing tube according to Claim 5,
**characterised in that** the inner tube (4) is coated or surface-treated in the region of the sliding fit.

7. Housing tube according to Claim 5 or 6,
**characterised in that** the wall thickness of the inner tube (4) is between 2mm and 3 mm.

## Revendications

1. Procédé de renforcement d'un tuyau à enveloppe pour des appareils de mesure dans un réacteur nucléaire, qui est constitué d'une première partie et d'une deuxième partie qui sont assemblées par une jointure,
**caractérisé en ce qu'**il est mis et élargi dans le tuyau un tube (4) intérieur recouvrant la jointure jusqu'à ce qu'il s'applique aux parois intérieures des parties du tuyau, le tube (4) intérieur étant pressé sur la première partie du tuyau en formant une liaison rigide et étant repoussé sur la deuxième partie du tuyau en formant un siège coulissant.

2. Procédé selon la revendication 1, **caractérisé en ce que** l'on élargit le tube (4) intérieur par voie hydraulique et/ou par voie mécanique.

3. Procédé selon la revendication 2, **caractérisé en ce qu'**avant de mettre le tube (4) intérieur dans le tuyau, on le revêt ou on le soumet à un autre traitement de surface dans la zone destinée au siège coulissant.

4. Procédé selon l'une des revendications 1 à 3, **caractérisé en ce que** l'épaisseur de la paroi du tube (4) intérieur est comprise entre 2 mm et 3 mm.

5. Tuyau à enveloppe pour des appareils de mesure dans un réacteur nucléaire qui est constitué d'une première partie et d'une deuxième partie qui sont assemblées par une jointure,
**caractérisé en ce que** pour le renforcement un tube (4) intérieur recouvrant la jointure est appliqué aux parois intérieures des pastilles, le tube (4) intérieur étant relié rigidement à la première partie et s'appliquant à la deuxième partie en formant un siège coulissant.

6. Tuyau à enveloppe selon la revendication 5, **caractérisé en ce que** le tube (4) intérieur est revêtu ou traité en surface dans la zone du siège coulissant.

7. Tuyau à enveloppe selon la revendication 5 ou 6, **caractérisé en ce que** l'épaisseur de la paroi du tube (4) intérieur est comprise entre 2 mm et 3 mm.
